# EUROPEAN PATENT APPLICATION

(11) **EP 4 692 643 A1**
(43) Date of publication of application: **11.02.2026**
(21) Application number: 24779753.3
(22) Date of filing: 19.03.2024
(51) Int. Cl.: F23C 1/12, C04B 7/44, F23D 17/00

(54) **COMBUSTION METHOD USING FUEL COMBUSTION DEVICE, CEMENT MANUFACTURING METHOD, AND CEMENT FIRING FACILITY**

(30) Priority: 29.03.2023 JP 2023052544
(71) Applicant: Sumitomo Osaka Cement Co., Ltd., Tokyo, 105-8641 (JP)
(72) Inventor: TAKAGI Chihiro, Tokyo 105-8641 (JP)
(74) Representative: Müller-Boré & Partner Patentanwälte PartG mbB
(86) International application number: PCT/JP2024/010771
(87) International publication number: WO 2024/203628

(57) **Abstract**

Provided are a combustion method using a fuel combustion device, a cement manufacturing method, and a cement calcination facility including a fuel combustion device, in which while the amount of a fossil fuel used as a fuel supplied to a fuel combustion device provided in various facilities such as a cement calcination facility is reduced, the radiation heat transfer amounts of various burners are maintained, whereby the amount of heat transferred to a heating target such as a powder raw material of cement clinker is maintained to maintain a state suitable for calcination thereof, the amount of carbon dioxide emitted from the various facilities is reduced, and the various facilities can be operated at a low cost, and a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used.

## Description

### TECHNICAL FIELD

The present disclosure relates to a combustion method using a fuel combustion device and a cement calcination facility.

### BACKGROUND

Recently, the interest in global warming has increased, and a reduction in emissions of carbon dioxide to the atmosphere has been required. In various facilities such as a power plant, an incinerator, a cement plant, an iron mill, or a plant facility, a method for reducing emissions of exhaust gas containing carbon dioxide that is produced by an operation to the atmosphere and recovering carbon dioxide is considered. In particular, a reduction in emissions of carbon dioxide in the cement plant is regarded as an urgent issue.

In a cement calcination facility, various efforts have been made to reduce the amount of carbon dioxide emitted. For example, Patent Literature No. 1 discloses that in a main burner blown into a cement kiln, a flammable gas is used as a main fuel, and a flammable waste is used as an auxiliary fuel. In addition, Patent Literature No. 2 discloses that cement clinker is calcined by supplying carbon-containing thermal energy and ammonia to a calcination furnace to a calcination furnace, and Patent Literature No. 3 discloses a fuel combustion facility including a fuel supply portion having an injection portion that injects an ammonia-containing gas containing ammonia. In the methods described in Patent Literature No. 1 to 3, a flammable gas, a non-fossil fuel, a carbon-free fuel, and the like are used, and the methods are techniques of reducing the amount of carbon dioxide emitted using, among those, a fuel such as a non-fossil fuel or a carbon-free fuel.

### Citation List

### Patent Literature

Patent Literature No. 1: Japanese Laid-open Patent Publication No. 2018-52746
Patent Literature No. 2: Japanese Laid-open Patent Publication No. 2019-137579
Patent Literature No. 3: Japanese Laid-open Patent Publication No. 2019-172484

### SUMMARY OF INVENTION

### Technical Problem

The present invention has been made in view of such circumstances, and an object of the present invention is to provide a combustion method using a fuel combustion device, a cement manufacturing method, and a cement calcination facility including a fuel combustion device, in which while the amount of a fossil fuel used as a fuel supplied to a fuel combustion device provided in various facilities such as a cement calcination facility is reduced, the radiation heat transfer amounts of various burners are maintained, whereby the amount of heat transferred to a heating target such as a powder raw material of cement clinker is maintained to maintain a state suitable for calcination thereof, the amount of carbon dioxide emitted from the various facilities is reduced, and the various facilities can be operated at a low cost.

### Solution to Problem

In order to solve the above-described problems, the present invention provides the following method for operating a fuel combustion device.
1. A combustion method using a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder.
   Furthermore, the present invention provides the following method for operating a fuel combustion device as a preferable embodiment.
2. The combustion method using a fuel combustion device according to 1, wherein the flammable powder is at least one powder selected from a fossil fuel, a non-fossil fuel, or a flammable waste.
3. The combustion method using a fuel combustion device according to 2, wherein the flammable powder is a coal powder.
4. The combustion method using a combustion fuel device according to any one of 1 to 3, wherein the fuel gas is at least one fuel gas selected from a flammable gas or a carbon-free gas fuel.
5. The combustion method using a fuel combustion device according to 4, wherein the flammable gas is at least one gas selected from a fossil fuel or a non-fossil fuel.
6. The combustion method using a fuel combustion device according to 4 or 5, wherein the carbon-free gas fuel is at least one gas selected from ammonia or hydrogen.
7. The combustion method using a fuel combustion device according to any one of 1 to 6, wherein the non-flammable powder is at least one powder selected from desalination dust, biomass incineration ash, coal ash, dust in a bottom portion of a clinker cooler, or garbage incineration ash.
8. The combustion method using a fuel combustion device according to any one of 1 to 7, wherein a volume-based average particle diameter of the non-flammable powder is 0.1 µm or more and 50 µm or less.
9. The combustion method using a fuel combustion device according to any one of 1 to 8, wherein a moisture content of the non-flammable powder is 5% by mass or less.
10. The combustion method using a fuel combustion device according to any one of 1 to 9, wherein an ignition loss of the non-flammable powder is 10% or less.
11. The combustion method using a fuel combustion device according to any one of 1 to 10, wherein an amount of the non-flammable powder supplied is set to 0.1 parts by mass or more and 10 parts by mass or less with respect to 1 part by mass of an amount of the flammable powder supplied corresponding to a total amount of heat generation that is equal to a total amount of heat generation of the fuel gas.
12. The combustion method using a fuel combustion device according to any one of 1 to 11, wherein the fuel combustion device has a flammable powder injection mechanism that injects the flammable powder, a fuel gas injection mechanism that injects the fuel gas, and a non-flammable powder injection mechanism that injects the non-flammable powder.
13. The combustion method using a fuel combustion device according to 12, wherein the flammable powder includes a coal powder, and the non-flammable powder injection mechanism injects the coal powder and the non-flammable powder.
14. The combustion method using a fuel combustion device according to any one of 1 to 13, the combustion method being used for combustion of a kiln burner provided in a rotary kiln in a cement calcination facility.
   In addition, the present invention provides the following cement manufacturing method.
15. A cement manufacturing method, wherein a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used as a kiln burner provided in a rotary kiln in a cement calcination facility.
   In addition, the present invention provides the following a cement calcination facility including a fuel combustion device.
16. A cement calcination facility, wherein a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used as a kiln burner provided in a rotary kiln.

### Advantageous Effects of Invention

According to the present invention, while the amount of a fossil fuel used as a fuel supplied to a fuel combustion device provided in various facilities such as a cement calcination facility is reduced, the radiation heat transfer amounts of various burners are maintained, whereby the amount of heat transferred to a heating target such as a powder raw material of cement clinker is maintained to maintain a state suitable for calcination thereof, the amount of carbon dioxide emitted from the various facilities is reduced, and the various facilities can be operated at a low cost.

### BRIEF DESCRIPTION OF DRAWINGS

[FIG. 1] A schematic view showing a preferable aspect of an injection mechanism of a fuel supply device used in a combustion method of the present embodiment.
[FIG. 2] A graph showing temperatures in a rotary kiln with respect to distances from a tip of a kiln burner in Examples and Comparative Examples.
[FIG. 3] A graph showing temperatures in the rotary kiln with respect to distances from the tip of the kiln burner in Examples and Comparative Examples.
[FIG. 4] A graph showing radiation heat transfer amounts in the rotary kiln with respect to distances from the tip of the kiln burner in Examples and Comparative Examples.
[FIG. 5] A graph showing radiation heat transfer amounts in the rotary kiln with respect to distances from the tip of the kiln burner in Examples and Comparative Examples.

### DESCRIPTION OF EMBODIMENTS

Hereinafter, an embodiment of the present invention (hereinafter, also referred to as "present embodiment") will be described. The present invention is not limited to the following embodiment, and any changes can be made within a range where the effects of the present invention do not deteriorate. The notation of a numerical range of "AA to BB" in the present specification means "AA or more and BB or less". In addition, in the present specification, numerical values regarding "or more", "or less", and "to" that relate to the description of a numerical range is any combination of numerical values. For example, when "CC to DD" and "EE to FF" in a certain numerical range are described, numerical ranges such as "CC to FF" and "EE to DD" are also included.

### [Combustion method using fuel combustion device]

A combustion method using a fuel combustion device of the present embodiment includes a fuel supply mechanism having a flammable powder supply mechanism that supplies a flammable powder, a fuel gas supply mechanism that supplies a fuel gas, and a non-flammable powder supply mechanism that supplies a non-flammable powder.

As described above, various studies have been conducted on the reduction of the amount of carbon dioxide emitted, and for example, the methods described in Patent Literature 1 to 3 have been disclosed. Reducing the amount of carbon dioxide emitted is one of the important issues, but maintaining a state suitable for calcination by maintaining a favorable combustion state of a burner provided in the various facilities, and furthermore, the amount of heat transferred to a heating target such as a powder raw material of cement clinker is extremely important for the stability of operation, the reduction of the amount of a fuel consumed, and the quality of a product, and attention has been paid to these performances. Therefore, there has been a demand not only for the reduction of the amount of carbon dioxide emitted but also for achieving both the reduction of the amount of carbon dioxide emitted and improvement in the stability of operation, the reduction of the amount of a fuel consumed, and the quality of a product on a high level.

The methods described in Patent Literature 1 to 3 are effective methods for reducing the amount of carbon dioxide emitted. However, amid a shift of the focus to the stability of operation, the reduction of the amount of a fuel consumed, and the quality of a product, it has been found that, for the methods described in these patent literature, there is room for further improvement in terms of the ease of adjustment for maintaining a state suitable for calcination by maintaining a favorable combustion state, and furthermore, the amount of heat transferred to a heating target such as a powder raw material of cement clinker.

For example, in the method described in Patent Literature 1, a flammable gas is used as a main fuel, a flammable waste is used as an auxiliary fuel, and it is described that the flammable waste promotes heating by radiation. However, the flammable waste plays a role of heating by combustion together with radiation, and when an attempt is made to improve the heating by radiation, the heating by combustion is also promoted. Therefore, there is a problem in that adjustment for maintaining a state suitable for calcination by maintaining a stable combustion state, and furthermore, the amount of heat transferred to a heating target such as a powder raw material of cement clinker is difficult.

In addition, in the method described in Patent Literature 2, a fossil fuel such as A heavy oil and ammonia are used, and in the method described in Patent Literature 3, an ammonia-containing gas and a fossil fuel or the like as another fuel containing no ammonia are used. However, in the methods described in these Patent Literature, heating by radiation is not sufficient, and there is room for improvement in heating by radiation.

In the combustion method using a fuel combustion device of the present embodiment, a flammable powder, a fuel gas, and a non-flammable powder are supplied. Since the combustion efficiency can be improved using the flammable powder and the fuel gas in combination, it becomes possible to reduce the amount of a fossil fuel used. In addition, since the radiation heat transfer amount can be maintained by supplying the non-flammable powder, it becomes possible to maintain the amount of heat transferred to a heating target such as a powder raw material of cement clinker to maintain a state suitable for calcination. With the above-described effects, the amount of carbon dioxide emitted in various facilities as a whole can be reduced, and it becomes possible to operate various facilities at a low cost.

The fuel combustion device used in the combustion method of the present embodiment will be described from a fuel being used.

### (Flammable powder)

Preferable examples of the flammable powder supplied by the flammable powder supply mechanism include fossil fuels such as coal; non-fossil fuels such as biomass fuels such as wood biomass fuels such as firewood, charcoal, ogalite, sawdust charcoal, briquettes, and wood flour, herbaceous biomass fuels obtained by performing a treatment such as carbonization, semi-carbonization, or pelletizing on various herbaceous plants such as grass clippings, wildflowers, and forage crops, and waste biomass fuels obtained by making organic wastes such as food waste, livestock excreta, and sewage sludge into refuse derived fuels, refuse derived paper and plastics densified fuels, and wood chips; flammable wastes such as waste plastics, meat and bone meal, and fiber waste; and the like. Among these, a coal powder is preferable in consideration of stable availability or the like.

These flammable powders can be used singly or a plurality thereof can be used in combination.

The shape of the flammable powder is not particularly limited as long as the shape allows the flammable powder to pass through a flow passage of a burner described later, and in consideration of improving the combustion efficiency to reduce the amount of a fossil fuel used and to reduce the amount of carbon dioxide emitted, the ease of handling, and the like, the maximum length may be normally set to 5 mm or less, and is preferably 2 mm or less, more preferably 1 mm or less, and still more preferably 0.5 mm or less. The lower limit is not particularly limited.

### (Fuel gas)

Preferable examples of the fuel gas supplied by the fuel gas supply mechanism include flammable gases such as gaseous fossil fuels and non-fossil fuels; carbon-free gas fuels such as hydrogen and ammonia; and the like. In addition, typical examples of the gaseous fossil fuels include natural gases; coal gases such as gases obtained by carbonizing coal and aqueous gases obtained by the steam reforming of a solid fuel such as charcoal or coal; oil gases obtained by thermally cracking a petroleum fraction such as heavy oil; and the like. In addition, preferable examples of the non-fossil fuels include synthesis gases such as synthetic methane and the like.

Among the above, from the viewpoint of reducing the amount of carbon dioxide emitted, the carbon-free gas fuels and the synthesis gases are preferable. These fuel gases can be used singly or a plurality thereof can be used in combination.

The amount of the fuel gas used is preferably 1 part by mass or more, more preferably 5 parts by mass or more, and still more preferably 8 parts by mass or more with respect to 100 parts by mass of the amount of the flammable powder used, and the upper limit thereof is preferably 20 parts by mass or less, more preferably 18 parts by mass or less, and still more preferably 15 parts by mass or less. When the amount of the fuel gas used is within the above-described range, it is possible to reduce the amount of the fossil fuel used and reduce the amount of carbon dioxide emitted by improving the combustion efficiency.

### (Non-flammable powder)

Preferable examples of the non-flammable powder supplied by the non-flammable powder supply mechanism include powders referred to as so-called dusts (soot and dust) and cinders (ashes). Dusts (soot and dust) and cinders (ashes) are all powders of soot and dust, ashes, or the like after the combustion or calcination of a flammable substance, and are thus not flammable powders but non-flammable powders.

Therefore, it can be said that in the combustion method of the present embodiment, the non-flammable powder contributes to maintaining a state suitable for calcination by maintaining the amount of heat transferred to a heating target such as a powder raw material of cement clinker by maintaining the radiation heat transfer amount, but does not contribute to improvement in combustibility.

Examples of the dusts (soot and dust) include dust emitted from various plant facilities, such as desalination dust, waste sand dust, electric furnace dust, converter dust, steel and iron dust, paper sludge incineration dust, cyclone collected dust, and dust (AQC dust) in the bottom portion of a clinker cooler. It is preferable to use dust emitted from various plant facilities in which the combustion method of the present embodiment is adopted in consideration of convenience. For example, in a case where the combustion method of the present embodiment is used in a cement clinker calcination facility, it is preferable to use desalination dust or dust in the bottom portion of the clinker cooler.

These dusts (soot and dust) can be used singly or a plurality thereof can be used in combination.

Examples of the cinders (ashes) include cinders (ashes) emitted from various plant facilities, such as coal ash (fly ash), biomass incineration ash, garbage incineration ash, coke ash, heavy oil combustion ash, flue ash, sewage incineration ash, and paper sludge incineration ash. It is preferable to use dust emitted from various plant facilities in which the combustion method of the present embodiment is adopted in consideration of convenience. For example, in a case where the combustion method of the present embodiment is used in a cement clinker calcination facility, it is preferable to use coal ash, biomass incineration ash, or garbage incineration ash.

These cinders (ashes) can be used singly or a plurality thereof can be used in combination.

The volume-based average particle diameter of the non-flammable powder is not particularly limited as long as the shape allows the non-flammable powder to pass through the flow passage of the burner described later. In consideration of improving the calcination state of a heating target such as a powder raw material of cement clinker by the radiation heat transfer amount to reduce the amount of a fossil fuel used and reduce the amount of carbon dioxide emitted, the ease of handling, and the like, the volume-based average particle diameter of the non-flammable powder is preferably 0.1 µm or more, more preferably 0.3 µm or more, and still more preferably 1 µm or more, and the upper limit thereof is preferably 50 µm or less, more preferably 45 µm or less, and still more preferably 30 µm or less.

The volume-based average particle diameter is a particle diameter (D₅₀) when a cumulative volume percentage is 50%, which can be measured by a laser diffraction type particle size distribution measurement method.

In consideration of improving the calcination state of a heating target such as a powder raw material of cement clinker by the radiation heat transfer amount to reduce the amount of a fossil fuel used and reduce the amount of carbon dioxide emitted, the moisture content of the non-flammable powder is preferably as small as possible, and is preferably 5% by mass or less, more preferably 3% by mass or less, and still more preferably 1% by mass or less.

In consideration of improving the calcination state of a heating target such as a powder raw material of cement clinker by the radiation heat transfer amount to reduce the amount of a fossil fuel used and reduce the amount of carbon dioxide emitted, the ignition loss of the non-flammable powder is preferably as low as possible, and is normally 10% or less, preferably 8% or less, more preferably 6% or less, and still more preferably 5% or less. The ignition loss serves as an index of the degree of the amount of unburned carbon contained, and the non-flammable powder used in the combustion method of the present embodiment has a small ignition loss as described above, does not contribute to combustibility, and can be said to exhibit non-flammability.

The ignition loss of the non-flammable powder can be measured in accordance with the method specified in "8.3 ignition loss" of JIS A6201:2015 (fly ash for concrete).

The amount of the non-flammable powder supplied is preferably 0.1 parts by mass or more, more preferably 0.3 parts by mass or more, and still more preferably 0.5 parts by mass or more with respect to 1 part by mass of the amount of the flammable powder supplied corresponding to the total amount of heat generation that is equal to the total amount of heat generation of the fuel gas, and the upper limit thereof is preferably 10 parts by mass or less, more preferably 8 parts by mass or less, still more preferably 5 parts by mass or less, and even still more preferably 3.5 parts by mass or less.

For example, normally, a flammable powder of coal or the like contains ash. The present inventors paid attention to the fact that in the case of using a fuel gas instead of the flammable powder, since the radiation heat transfer amount is reduced due to the lack of ash, the calcination state deteriorates due to, for example, the reduction of the amount of heat transferred to a heating target such as a powder raw material of cement clinker, and studied the replenishment of ash using a non-flammable powder. In the combustion method of the present embodiment, it can be said that a fuel gas is used to reduce the amount of the flammable powder such as coal used, and an non-flammable powder is supplied to cope with the lack of ash content due to the reduction of the amount of the flammable powder used.

According to the combustion method of the present embodiment, since the amount of ash supplied can be adjusted by supplying the non-flammable powder within the above-described range depending on the kind and amount of the flammable powder and the fuel gas used, it becomes easy to maintain the radiation heat transfer amount, and it becomes easy to improve the calcination state by, for example, improvement in the amount of heat transferred to a heating target such as a powder raw material of cement clinker. As a result, since the combustion efficiency can be improved, the amount of a fossil fuel used can be reduced, and as a result, it becomes possible to reduce the amount of carbon dioxide emitted. In addition, when a non-fossil fuel, a carbon-free gas fuel, or the like is adopted as the fuel gas as described above, it is possible to contribute to the further reduction of the amount of carbon dioxide emitted.

### (Fuel supply mechanism)

The fuel combustion device used in the combustion method of the present embodiment includes a fuel supply mechanism of a flammable powder supply mechanism for supplying the flammable powder, a fuel gas supply mechanism that supplies the fuel gas, and a non-flammable powder supply mechanism having the non-flammable powder supply mechanism. When the fuel supply mechanism is provided, the flammable powder, the fuel gas, and the non-flammable powder can be supplied, and these fuels and the like can be combusted.

The form of the fuel supply mechanism is not particularly limited as long as the fuel supply mechanism can supply the flammable powder, the fuel gas, and the non-flammable powder. For example, in the case of a flammable powder supply mechanism, the mechanism preferably has a configuration in which a flammable powder can be sent by air using a transport gas upon the supply of the flammable powder. More specifically, the mechanism may include an instrument such as an ejector (or an in-line mixer) for introducing the flammable powder into the transport gas such as air or a volumetric feeder for quantitatively supplying the flammable powder to the transport gas. In addition, a pipe for transporting the flammable powder or a device such as a blower may be provided.

In addition, even for the non-flammable powder supply mechanism, the configuration is the same as that of the above-described flammable powder supply mechanism.

The fuel gas supply mechanism may include at least a pipe for supplying the fuel gas, and may include an ejector (or an in-line mixer) for introducing the fuel gas into a gas such as air as necessary. In addition, in order to grasp the flow rate of the fuel gas and adjust the flow rate, the fuel gas supply mechanism may include an instrument such as a flowmeter or a flow control valve.

### (Injection mechanism)

The fuel supply device used in the combustion method of the present embodiment preferably includes, in addition to the fuel supply mechanism, a fuel injection mechanism of a flammable powder injection mechanism that injects a flammable powder, a fuel gas injection mechanism that injects a fuel gas, and a non-flammable powder injection mechanism that injects a non-flammable powder. When the fuel supply device has the fuel injection mechanism, it is possible to more uniformly inject each fuel and an unheated powder. Therefore, the combustion efficiency can be improved, the amount of a fossil fuel used can be thus reduced, and as a result, it becomes possible to reduce the amount of carbon dioxide emitted.

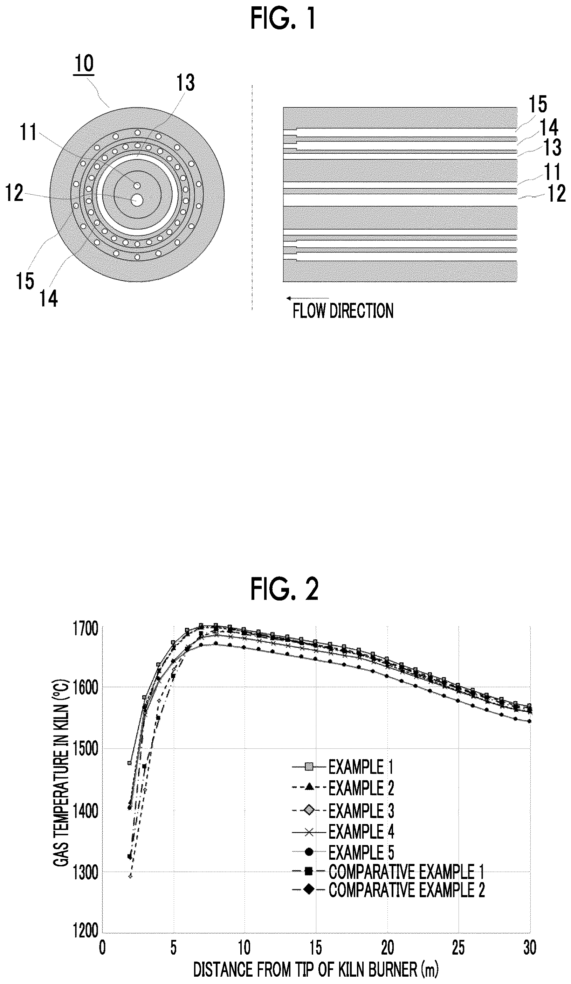

The injection mechanism that the fuel supply device preferably has will be described using FIG. 1. FIG. 1 is a schematic view showing a preferable aspect of the injection mechanism that the fuel supply device used in the combustion method of the present embodiment preferably has. FIG. 1 shows an injection port of a kiln burner provided in a rotary kiln, which is one of the fuel combustion devices, as the injection mechanism. The rotary kiln is a device provided in a cement calcination facility, and is a device that calcines a powder raw material of cement clinker to produce cement clinker. The kiln burner is a fuel combustion device used to calcine the powder raw material of cement clinker.

The kiln burner shown in FIG. 1 is a cylinder, has a circular cross-sectional shape, and has five types of injection ports 11 to 15 as injection ports of the kiln burner. In addition, it is shown that these injection ports 11 to 15 are provided along a plurality of concentric circles, two injection ports, the injection ports 11 and 12, are provided in a region on the innermost peripheral side, an annular injection port 13 and a plurality of circular injection ports 14 along the circumference of a concentric circle are provided on the outer peripheral side, and a plurality of circular injection ports 15 are provided on the outer peripheral side of the injection ports 13 and 14.

The injection port 13 is preferably used as an injection port for the main fuel, and in the combustion method of the present embodiment, at least one of the flammable powder and the fuel gas is preferably injected (hereinafter the flammable powder and the fuel gas injected from the injection port 13 are referred to as "main fuel" in some cases). In this case, the flammable powder is preferably a coal powder. When the main fuel is injected from the injection port 13, it is possible to improve the combustion state. In addition, since the combustion efficiency can be improved, the amount of a fossil fuel used can be reduced, and as a result, it becomes possible to reduce the amount of carbon dioxide emitted. In addition, it is preferable to inject the non-flammable powder from the injection port 13 together with the main fuel.

The injection ports 11 and 12 inject the fuel supplied from the fuel supply mechanism toward a region on the inner peripheral side of the annular main fuel injected from the injection port 13. Here, as the fuel injected from the injection ports 11 and 12, aside from the main fuel of the flammable powder and the fuel gas, a flammable liquid may also be adopted.

Examples of the flammable liquid include fossil fuels such as kerosene, heavy oil, and recycled oil; flammable waste such as waste oil and waste glycerin; and recycled fuels such as recycled fuels produced from waste vegetable oil (for example, waste vegetable cooking oil or the like) or other industrial wastes; and the like.

The injection ports 11 to 13 are circular or annular flow passages parallel to the central axis of the cylindrical kiln burner, and the turning angle of the main fuel is preferably set to 0° by these injection ports. Here, in the present specification, numerical values of the turning angle are set values, and in the case of actually injecting the main fuel, there may be a discrepancy in turning angle. In a case where there is a discrepancy, the discrepancy is normally ±10° or less.

Regarding the injection ports 11 and 12 provided on the innermost peripheral side, in FIG. 1, the opening portion of the injection port 12 is shown larger than that of the injection port 11. The opening portions of the injection ports 11 and 12 may be different from each other as described above or may be the same as each other.

FIG. 1 shows that one injection port 11 and one injection port 12 are provided, but a plurality of the injection ports 11 and a plurality of the injection ports 12 may be provided. In this case, it is also possible to provide, for example, one injection port 11 and two injection ports 12 each having a larger opening portion. It is preferable that the number of the injection ports 11 having a smaller opening portion is larger than the number of the injection ports 12 having a larger opening portion. When a larger number of the injection ports 11 having a small opening portion are provided, since the flow speed of the main fuel and the flammable liquid can be increased, it is possible to improve the combustion state. In addition, since the combustion efficiency can be improved, the amount of a fossil fuel used can be reduced, and as a result, it becomes possible to reduce the amount of carbon dioxide emitted.

The number of the injection ports 11 may vary depending on the scale of the injection mechanism (the kiln burner in the case of FIG. 1), the type of a fuel used, and the like, and thus cannot be generally said, but is preferably one or two and more preferably one. In addition, the number of the injection ports 12, similar to that of the injection ports 11, cannot be generally said, but is preferably one or more, and the upper limit thereof is preferably four or less, more preferably three or less, and still more preferably two or less.

Upon the injection of the main fuel in the injection port 13, the injection speed of the main fuel is preferably 15 m/s or more, more preferably 20 m/s or more, and still more preferably 25 m/s or more, and the upper limit thereof is preferably 60 m/s or less. Within the above-described range, the main fuel injected from the injection port 13 is injected in a straight flow, and a favorable combustion state can be obtained, and it is thus possible to combust the fuel at a higher temperature (approximately 1450°C in the rotary kiln). In addition, improvement in the combustion efficiency makes it possible to reduce the amount of a fossil fuel used and makes it easy to reduce the amount of carbon dioxide emitted.

Since the flammable powder is normally injected together with the transport gas such as air as described above, the injection speed of the flammable powder becomes the flow speed of the transport gas.

In a case where the flammable powder or the flammable powder and the non-flammable powder are injected from the injection port 13, the amount of the transport air used varies depending on the type of the flammable powder that serves as the main fuel, and thus cannot be generally said, but is normally 3 Nm³ or more, preferably 5 Nm³ or more, and more preferably 10 Nm³ or more with respect to one ton of the flammable powder or one ton of the total amount of the flammable powder and the non-flammable powder, and the upper limit thereof is normally 25 Nm³ or less and preferably 20 Nm³ or less.

In addition, in a case where the flammable powder and the non-flammable powder are injected from the injection port 13, the amount of the flammable powder used with respect to 1 part by mass of the non-flammable powder varies depending on the types of the flammable powder and the non-flammable powder, and thus cannot be generally said, but is normally 3 parts by mass or more and preferably 5 parts by mass or more, and the upper limit thereof is normally 15 parts by mass or less and preferably 13 parts by mass or less.

The injection ports 14 are injection ports that are on the outer peripheral side of the injection port 13 that serves as the injection portion for the main fuel and are provided closest to the injection port 13, and the injection ports 15 are provided on the outer peripheral side of the injection ports 14.

The injection port 14 is preferably used as a fuel gas and non-flammable powder injection mechanism. When the non-flammable powder is injected from near the injection port 13 used as the injection mechanism for the main fuel, the radiation heat transfer amount from a non-heating powder can be more effectively used, and the calcination state of a heating target such as a powder raw material of cement clinker can be thus improved. In addition, when the fuel gas is injected, it is possible to improve the combustion efficiency. Therefore, in any case, the amount of the fossil fuel used can be reduced, and as a result, it becomes possible to reduce the amount of carbon dioxide emitted.

In a case where the injection port 14 is used as the non-flammable powder injection mechanism, the injection port 14 preferably injects a coal powder as the flammable powder together with the non-flammable powder. That is, the non-flammable powder injection mechanism preferably injects a coal powder and the non-flammable powder. As a result, the radiation heat transfer amount from the non-flammable powder can be more effectively used, and the calcination state of a heating target such as a powder raw material of cement clinker can be thus further improved. In addition, since the combustion efficiency can be further improved, the amount of a fossil fuel used can be further reduced, and as a result, it becomes possible to reduce the amount of carbon dioxide emitted.

The fuel gas or the air may be singly injected from the injection port 14, or the fuel gas and the air may be injected at the same time. In the case of injecting the fuel gas and the air at the same time, the amount of the air used with respect to one ton of the fuel gas varies depending on the type of the fuel gas and cannot be generally said, but is normally 3 Nm³ or more and preferably 5 Nm³ or more with respect to one ton of the fuel gas, and the upper limit thereof is normally 20 Nm³ or less and preferably 15 Nm³ or less.

The injection port 15 is normally used as an injection mechanism for the fuel gas and the air. The injection speed of the fuel gas or the air in the injection port 15 is preferably 50 m/s or more, more preferably 70 m/s or more, and still more preferably 100 m/s or more, and the upper limit thereof may be set to 300 m/s or less.

In addition, the turning speed of the fuel gas and the air injected from the injection port 15 is preferably set to 0° or more, and the upper limit thereof is preferably 30° or less and more preferably 15° or less.

When the injection port 15 is used as the injection mechanism for the fuel gas and the air, and the injection speed is set to be within the above-described range, it is possible to improve the combustion state. In addition, since the combustion efficiency can be improved, the amount of the fossil fuel used can be reduced, and as a result, it becomes possible to reduce the amount of carbon dioxide emitted. In addition, this is also true even in a case where the turning speed is set to be within the above-described range.

In these injection ports 14 and 15, a plurality of circular flow passages are disposed at equal intervals on the circumferences of different concentric circles. The injection ports 14 are composed of a total of 26 circular flow passages, and the injection ports 15 are composed of a total of 18 circular flow passages. The number of the flow passages in the injection ports 14 and 15 shown in FIG. 1 is merely a preferable aspect and is not limited thereto, and the total number of the injection ports 14 may be the same as the total number of the injection ports 15 or different from the total number of the injection ports 15. From the viewpoint of improving the combustion efficiency, it is preferable that the total number of the injection ports 14 is equal to or greater than the total number of the injection ports 15.

The number of the injection ports 14, similar to that of the injection ports 11, cannot be generally said, but is preferably 12 or more, more preferably 16 or more, and still more preferably 20 or more, and the upper limit thereof is preferably 32 or less, more preferably 30 or less, and still more preferably 28 or less. The number of the injection ports 15, similar to that of the injection ports 14, cannot be generally said, but is preferably 12 or more, more preferably 14 or more, and still more preferably 16 or more, and the upper limit is preferably 24 or less, more preferably 22 or less, and still more preferably 20 or less.

When the injection ports 14 and 15 have the above-described configuration, it is possible to improve the combustion state. In addition, since the combustion efficiency can be improved, the amount of the fossil fuel used can be reduced, and as a result, it becomes possible to reduce the amount of carbon dioxide emitted.

The combustion method of the present embodiment can be adopted in a device including a fuel combustion device that combusts a flammable powder such as a fossil fuel in the related field, and can be suitably adopted in, for example, a device provided in a cement calcination facility, specifically, for combustion in a burner provided in a suspension preheater that preheats and calcines a powder raw material, a rotary kiln that calcines the preheated and calcined powder raw material to produce cement clinker, and the like.

Among these, the combustion method can be suitably adopted for combustion in a rotary kiln burner. That is, the fuel combustion device used in the combustion method of the present embodiment is suitably used as a burner that performs combustion in a suspension preheater or a rotary kiln which is provided in a cement calcination facility, and in consideration of the fact that combustion at an extremely high temperature of, for example, about 1450°C is possible, the fuel combustion device can be suitably used as a burner (rotary kiln burner) that performs combustion in a rotary kiln.

### [Cement manufacturing method]

A cement manufacturing method of the present embodiment is a cement manufacturing method, in which a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used as a kiln burner provided in a rotary kiln in a cement calcination facility.

A flammable powder and a flammable powder supply mechanism that supplies the flammable powder, a fuel gas and a fuel gas supply mechanism that supplies the fuel gas, a non-flammable powder and a non-flammable powder supply mechanism that supplies the non-flammable powder, a fuel supply mechanism having a flammable powder supply mechanism, a fuel gas supply mechanism, and a non-flammable powder supply mechanism, and a fuel combustion device including these supply mechanisms are as described in the combustion method using a fuel combustion device of the present embodiment.

The fact that the fuel supply device used in the manufacturing method of the present embodiment preferably includes the fuel injection mechanism of the flammable powder injection mechanism, the fuel gas injection mechanism, and the non-flammable powder injection mechanism is also described in the combustion method of the fuel combustion device.

Additionally, various conditions in the fuel gas supply mechanism and the fuel injection mechanism, and the kiln burner provided in the rotary kiln in the cement calcination facility, and the like are also as described in the combustion method using a fuel combustion device of the present embodiment.

### [Cement calcination facility]

A cement calcination facility of the present embodiment refers to a facility in which a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used as a kiln burner provided in a rotary kiln.

The cement calcination facility of the present embodiment can include devices that known cement calcination facilities include, for example, a drying and pulverizing device that dries and pulverizes a cement raw material to produce a powder raw material, a suspension preheater that preheats and calcines the powder raw material, a rotary kiln that calcines the preheated and calcined powder raw material to produce cement clinker, a clinker cooler that cools the cement clinker, an exhaust gas cooling device that cools exhaust gas emitted from the suspension preheater, and the like.

The fuel combustion device in the cement calcination facility of the present embodiment is used as a burner provided in a rotary kiln that calcines the preheated and calcined powder raw materials to produce cement clinker. That is, the fuel combustion device is used to calcine the powder raw material.

### Examples

Hereinafter, the present invention will be described in detail using Examples, but is not limited to the following Examples.

Combustion analysis of the inside in a rotary kiln was performed using simulation software ("Ansys Fluent (product name)", manufactured by ANSYS, Inc.). The simulation conditions are as follows. In order to reduce the calculation load, a length of 30 m (on a kiln burner installation side) of the rotary kiln was set as the target of the combustion analysis.
Rotary kiln: diameter: 3.1 m, length: 66 m
Kiln burner: kiln burner having injection ports shown in FIG. 1 (diameter: 1.0 m, length: 6.5 m, injection port 11: circular shape having a diameter of 0.2 m, injection port 12: circular shape having a diameter of 0.25 m, injection port 13: width of 0.13 m, injection port 14: circular shape having a diameter of 0.13 m, injection port 15: circular shape having a diameter of 0.15 m)
Coal powder (flammable powder)
Lower calorific value: 28946 kJ/kg
Moisture: 3% by mass
Volatile content: 37% by mass
Ash content: 8% by mass
Solid carbon content: 51% by mass
Natural gas (fuel gas)
Composition: 100% of methane
Lower calorific value: 35.90 MJ/Nm³

The properties of non-flammable powders are shown in the following first table. The ignition losses and the moisture contents are zero.

**[Table 1]**

| First table | | | | | |
|---|---|---|---|---|---|
| | | A | B | C | D |
| | | Desalination dust | Biomass ash | Fly ash | AQC dust |
| Density | kg/m³ | 3320 | 2718 | 2350 | 3027 |
| Specific heat | J/kg | 783 | 835 | 1048 | 877 |
| Average particle diameter | µm | 13 | 25 | 19 | 13 |

### (Examples 1 to 8 and Comparative Examples 1 and 2)

The temperatures and radiation heat transfer amounts in the kiln were calculated by simulation when the flammable powder, the fuel gas, the non-flammable powder, and air were injected from each injection port at flow rates shown in the following second table. The air supplied from each injection port is used for transportation of the flammable powder and the non-flammable powder and for combustion of the flammable powder and the non-flammable powder. In addition, secondary air is high-temperature air after the cooling of high-temperature cement clinker in a clinker cooler, and is air introduced into the rotary kiln at temperatures shown in the second table.

The above-described simulation software used in the simulation of Examples and Comparative Examples is general-purpose software, and is in use for simulation of kiln burners of cement clinker and other similar burners. In addition, from the comparison between the simulation result of Comparative Example 1, which is the operational result in the related field, and the operational status in the related field, it is confirmed that the position of the highest temperature in the kiln and the temperature at the kiln outlet substantially match the operational status, which is considered as highly reliable results.

**[Table 2]**

| Second table | | | | | | | | | | | |
|---|---|---|---|---|---|---|---|---|---|---|---|
| | | Example | | | | | | | | Comparative Example | |
| | | 1 | 2 | 3 | 4 | 5 | 6 | 7 | 8 | 1 | 2 |
| Flammable powder | | | | | | | | | | | |
| Injection port 13 | ton/h | 2.4 | 2.4 | 2.4 | 2.4 | 2.4 | 2.4 | 2.4 | 2.4 | 2.4 | 2.8 |
| | °C | 50 | 50 | 50 | 50 | 50 | 50 | 50 | 50 | 50 | 50 |
| Fuel gas | | | | | | | | | | | |
| Injection port 14 | ton/h | 0.22 | 0.23 | 0.235 | 0.24 | 0.255 | 0.23 | 0.23 | 0.23 | 0.22 | 0 |
| | °C | 50 | 50 | 50 | 50 | 50 | 50 | 50 | 50 | 50 | - |
| Non-flammable powder | | A | A | A | A | A | B | C | D | - | - |
| Injection port 13 | ton/h | 0.25 | 0.5 | 1.0 | 1.25 | 2.0 | 0.5 | 0.5 | 0.5 | 0 | 0 |
| | °C | 50 | 50 | 50 | 50 | 50 | 50 | 50 | 50 | - | - |
| Air | | | | | | | | | | | |
| Injection port 13 | Nm³/min | 33.6 | 34.9 | 36.2 | 38.9 | 42.6 | 34.9 | 34.9 | 34.9 | 33.6 | 36.8 |
| | °C | 50 | 50 | 50 | 50 | 50 | 50 | 50 | 50 | 50 | 50 |
| Injection port 14 | Nm³/min | 1.89 | 1.93 | 2.02 | 2.06 | 2.19 | 1.93 | 1.93 | 1.93 | 1.89 | 0 |
| | °C | 50 | 50 | 50 | 50 | 50 | 50 | 50 | 50 | 50 | 50 |
| Injection port 15 | Nm³/min | 98.0 | 98.0 | 98.0 | 98.0 | 98.0 | 98.0 | 98.0 | 98.0 | 98.0 | 98.0 |
| | °C | 50 | 50 | 50 | 50 | 50 | 50 | 50 | 50 | 50 | 50 |
| Secondary air | Nm³/min | 331 | 331 | 331 | 331 | 331 | 331 | 331 | 331 | 331 | 331 |
| | °C | 880 | 880 | 880 | 880 | 880 | 880 | 880 | 880 | 880 | 880 |
| Amount of clinker generated | ton/h | 63.25 | 63.5 | 64.0 | 64.25 | 65.0 | 63.5 | 63.5 | 63.5 | 63.0 | 63.0 |

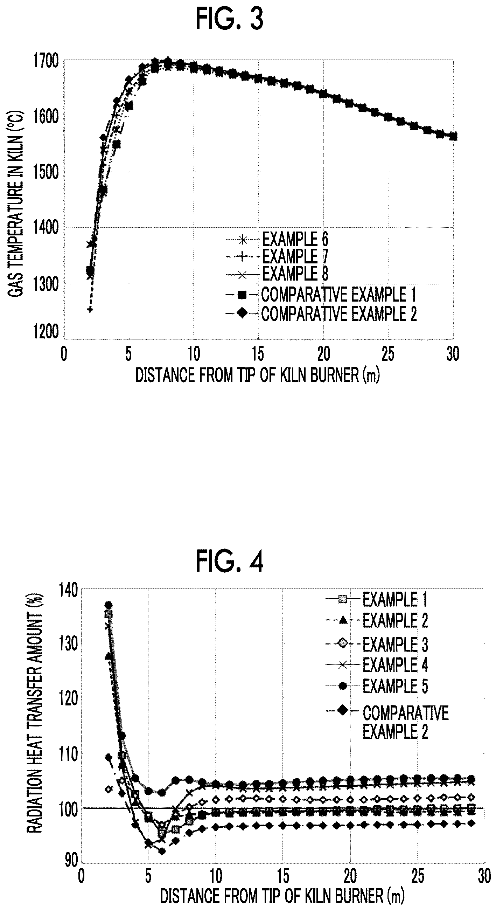

The simulation results are shown in FIG. 2 to FIG. 5. FIG. 2 shows the temperatures in the rotary kiln with respect to the distances from the tip of the kiln burner in Examples 1 to 5 and Comparative Examples 1 and 2, and FIG. 3 shows the temperatures in the rotary kiln with respect to the distances from the tip of the kiln burner in Examples 6 to 8 and Comparative Examples 1 and 2. According to the combustion method of the present embodiment, it was confirmed that the temperatures in the rotary kiln can be maintained at high temperatures. In Example 5, the temperatures in the rotary kiln were within an allowable range lower than those in other Examples, and the radiation heat transfer amount was significantly excellent as described later, and the result is thus that there is no problem in terms of the manufacturing of the amount of clinker generated.

Regarding Comparative Examples 1 and 2 in which the non-flammable powder was not used, Comparative Example 1 was an example in which the amount of coal used was adjusted in order to obtain results comparable to the results of Examples, but it was confirmed that there was a need to increase the amount by about 20% as compared with those of Examples. In addition, it was found that in Comparative Example 1, the temperature tended to decrease particularly in a region close to the kiln burner.

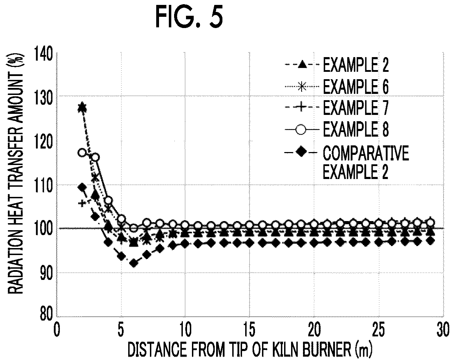

FIG. 4 shows the percentages of the radiation heat transfer amounts in the rotary kiln to the distances from the tip of the kiln burner in Examples 1 to 5 and Comparative Example 2 when the numerical value of Comparative Example 1 was set to 100, and FIG. 5 shows the percentages of the radiation heat transfer amounts in the rotary kiln to the distances from the tip of the kiln burner in Examples 2, 6 to 8 and Comparative Example 2 when the numerical value of Comparative Example 1 was set to 100.

According to the results of Examples, it is found that although there was a region (a region with a radiation heat transfer amount of below 100) where the radiation heat transfer amount became small compared with that in Comparative Example 1, the radiation heat transfer amounts were equal to or higher than that in Comparative Example 1 in regions 8 m or more away from the tip of the kiln burner, and a state suitable for the calcination of cement clinker was maintained. The fact that the radiation heat transfer amounts particularly in regions 8 m or more and about 20 m away from the tip of the kiln burner are maintained is extremely effective for maintaining a state suitable for the calcination of cement clinker. It is needless to say that in the above-described regions, the radiation heat transfer amounts may vary depending on the operating conditions such as the size of the rotary kiln, the cement clinker production capacity, and the size of the burner.

In addition, the radiation heat transfer amounts in the rotary kiln of Examples tended to increase compared with that in Comparative Example 2, and it is considered that the radiation heat transfer amount is favorable upon the calcination of cement clinker.

## Claims

1. A combustion method using a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder.

2. The combustion method using a fuel combustion device according to claim 1, wherein the flammable powder is at least one powder selected from a fossil fuel, a non-fossil fuel, or a flammable waste.

3. The combustion method using a fuel combustion device according to claim 2, wherein the flammable powder is a coal powder.

4. The combustion method using a combustion fuel device according to claim 1 or 2, wherein the fuel gas is at least one fuel gas selected from a flammable gas or a carbon-free gas fuel.

5. The combustion method using a fuel combustion device according to claim 4, wherein the flammable gas is at least one gas selected from a fossil fuel or a non-fossil fuel.

6. The combustion method using a fuel combustion device according to claim 4, wherein the carbon-free gas fuel is at least one gas selected from ammonia or hydrogen.

7. The combustion method using a fuel combustion device according to claim 1 or 2, wherein the non-flammable powder is at least one powder selected from desalination dust, biomass incineration ash, coal ash, dust in a bottom portion of a clinker cooler, or garbage incineration ash.

8. The combustion method using a fuel combustion device according to claim 1 or 2, wherein a volume-based average particle diameter of the non-flammable powder is 0.1 µm or more and 50 µm or less.

9. The combustion method using a fuel combustion device according to claim 1 or 2, wherein a moisture content of the non-flammable powder is 5% by mass or less.

10. The combustion method using a fuel combustion device according to claim 1 or 2, wherein an ignition loss of the non-flammable powder is 10% or less.

11. The combustion method using a fuel combustion device according to claim 1 or 2, wherein an amount of the non-flammable powder supplied is set to 0.1 parts by mass or more and 10 parts by mass or less with respect to 1 part by mass of an amount of the flammable powder supplied corresponding to a total amount of heat generation that is equal to a total amount of heat generation of the fuel gas.

12. The combustion method using a fuel combustion device according to claim 1 or 2, wherein the fuel combustion device has a flammable powder injection mechanism that injects the flammable powder, a fuel gas injection mechanism that injects the fuel gas, and a non-flammable powder injection mechanism that injects the non-flammable powder.

13. The combustion method using a fuel combustion device according to claim 12, wherein the flammable powder includes a coal powder, and the non-flammable powder injection mechanism injects the coal powder and the non-flammable powder.

14. The combustion method using a fuel combustion device according to claim 1 or 2, the combustion method being used for combustion of a kiln burner provided in a rotary kiln in a cement calcination facility.

15. A cement manufacturing method, wherein a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used as a kiln burner provided in a rotary kiln in a cement calcination facility.

16. A cement calcination facility, wherein a fuel combustion device including a fuel supply mechanism having a flammable powder supply mechanism that supplies a flammable powder, a fuel gas supply mechanism that supplies a fuel gas, and a non-flammable powder supply mechanism that supplies a non-flammable powder is used as a kiln burner provided in a rotary kiln.
